# EUROPEAN PATENT SPECIFICATION

(11) **EP 3 059 470 B1**
(45) Date of publication and mention of the grant of the patent: **15.01.2020**
(21) Application number: 14865673.9
(22) Date of filing: 27.11.2014
(51) Int. Cl.: F16H 25/24, F16H 25/22, F16H 57/04

(54) **BALL SCREW**
KUGELSCHRAUBE
VIS À BILLES

(30) Priority: 28.11.2013 JP 2013246342
(43) Date of publication of application: 24.08.2016
(73) Proprietor: NSK Ltd., Tokyo 141-8560 (JP)
(72) Inventor: MIYAZAKI, Kazunari, Fujisawa-shi Kanagawa 252-0811 (JP); MARUYAMA, Daisuke, Fujisawa-shi Kanagawa 252-0811 (JP)
(74) Representative: Klingseisen, Franz
(86) International application number: PCT/JP2014/005939
(87) International publication number: WO 2015/079697

(56) References cited:
- DE-A1-102006 014 359
- JP-A- H10 205 605
- JP-A- H10 299 854
- JP-A- 2000 145 916
- JP-A- 2007 232 051
- JP-A- 2007 232 130
- JP-A- 2007 255 661
- JP-A- 2007 309 428
- JP-A- 2010 025 321
- US-A1- 2007 227 278

## Description

### Technical Field

The present invention relates to ball screws including seals with slits.

### Background Art

An example of ball screws including a seal with slits is a ball screw disclosed in PTL 1. The seal provided in the ball screw is a contact seal having a cylindrical shape and has a seal mountain that is engaged with a helical groove of a screw shaft on an inner periphery thereof. The seal is mounted in a nut in such a manner that a part of the seal protrudes outward from an end face of the nut. Additionally, the protruding part is split by a plurality of slits. The length of the slits is made to be 0.7 times or more than a lead of the screw shaft.

Herein, the ball screw disclosed in PTL 1 satisfies a relationship of 0 < θ1 ≤ θ, where an angle between the slits extending in an axial direction and a screw shaft line is 01 and a lead angle of the screw shaft is θ. Additionally, the slits are inclined by 02 with respect to a vertical direction on a circumferential surface of the shaft. Foreign matter entering from a direction outside the nut hits against an inner peripheral surface of the seal contacted with the shaft, climbs up in a direction of the angle 02, and is scraped out onto an outer peripheral surface of a seal trunk. After that, the foreign matter accumulated to some extent naturally falls by its own weight from the outer peripheral surface of the seal trunk. A further prior art according to JP 2007 232051 A discloses a ball screw device with a wiper seal consisting of a cylindrical portion and a wiper seal portion, wherein the wiper seal portion is protruding on an inner diameter side of the seal in order to prevent the entry of dust into a nut without increasing the operating torque.

### Citation List

### Patent Literature

PTL 1: Japanese Patent No. 3692677

### Summary of Invention

### Technical Problem

However, in the ball screw of PTL 1, a gap between the inner peripheral surface of the seal and the surface of the screw shaft is uniform and very small. Due to this, although grease on the surface of the screw shaft is plated with a constant small thickness, the grease can be simultaneously swept by an end of the seal. Thereby, extra grease gathers at the end of the seal or the extra grease can be also accumulated on the screw shaft and scattered by centrifugal force of the screw shaft. Thus, there has been room for improvement.

The present invention has been accomplished by focusing on the above problem. It is an object of the invention to provide a ball screw that more efficiently prevents accumulation and scattering of extra grease in a nut. Solution to Problem

In order to solve the above problem, the present inventors repeated intensive and extensive studies and consequently found out that it is enough for a seal to have a function of taking out extra grease at a position where the centrifugal force of a screw shaft hardly acts on.

The present invention is based on the knowledge obtained by the present inventors, and an aspect of a ball screw for solving the above problem includes a screw shaft, a nut, and a plurality of balls, in which the screw shaft passes through the nut, a rolling path along which the balls roll is formed by a helical groove formed on an outer peripheral surface of the screw shaft and a helical groove formed on an inner peripheral surface of the nut, the balls are disposed in the rolling path, a seal is attached to at least one end of ends of the nut in a moving direction of the nut. The seal surrounds an outer periphery of the screw shaft and comprises: a seal mountain inside the seal entering the helical groove of the screw shaft; a tubular portion exposed axially outside the nut; a grease reservoir portion provided on an inner peripheral surface of the tubular portion so as to form a space with respect to the screw shaft; characterized by a discharge outlet communicating with the grease reservoir portion and open to an outer peripheral surface of the tubular portion; and a slit communicating with the discharge outlet and extending axially in the tubular portion of the seal, and a cover that covers the seal is provided on the nut or the seal.

In addition, the slit may be provided in the tubular portion of the seal in such a shape as to be inclined with respect to a line in a diameter direction of the screw shaft in a counterclockwise direction as viewed from an outer end face of the tubular portion when the screw shaft has right-hand threads and in a clockwise direction as viewed from the outer end face of the tubular portion when the screw shaft has left-hand threads.

In addition, in the above ball screw, the slit of the seal may be inclined with respect to an axial line of the screw shaft in a direction along the helical groove formed on the outer peripheral surface of the screw shaft, which helical groove defines a lead angle of the threads of the screw shaft.

In addition, the slit may be provided in the tubular portion of the seal in such a shape as to extend in an axial direction of the seal.

In addition, in the above ball screw, a gap may be provided between the outer peripheral surface of the screw shaft and an inner peripheral surface of the seal, and a gap size between the helical groove of the screw shaft and the inner peripheral surface of the seal may be larger than a gap size between a land portion of the screw shaft and the inner peripheral surface of the seal. The respective gap sizes are sizes in the radial direction of the screw shaft. It is to be noted that the gap size between the land portion of the screw shaft and the inner peripheral surface of the seal may be preferably 0.3 mm or less.

### Advantageous Effects of Invention

According to the aspect of the present invention, there can be provided a ball screw that more efficiently prevents accumulation and scattering of extra grease in a nut.

### Brief Description of Drawings

FIG. 1 is a partially sectioned side view depicting a structure in an aspect of a ball screw;
FIGs. 2A and 2B are diagrams depicting structures of a seal and a cover in aspects of the ball screw, in which FIG. 2A is an axial sectional view of the seal and FIG. 2B is a partial sectional view depicting an installation mode of the cover;
FIGs. 3A to 3D are diagrams depicting other installation modes of the cover in the ball screw, in which FIG. 3A is an axial partial sectional view, FIG. 3B is a perspective view of the cover depicted in FIG. 3A, FIG. 3C is an axial partial sectional view, and FIG. 3D is a perspective view of the cover depicted in FIG. 3C;
FIGs. 4A to 4C are diagrams depicting another installation mode of the cover in the ball screw, in which FIG. 4A is an axial sectional view, FIG. 4B is an axial partial sectional view, and FIG. 4C is perspective view;
FIG. 5 is a front view depicting a structure in an aspect of the ball screw;
FIG. 6 is a partially enlarged view of FIG. 5;
FIG. 7 is a diagram of a slit as viewed from an arrow A in FIG. 6;
FIGs. 8A to 8C are diagrams depicting a mechanism in which scattering of grease is prevented by the ball screw, in which FIG. 8A is an axial sectional view, FIG. 8B is a front view depicting an effect of the seal positioned on a front side in a moving direction of a nut, and FIG. 8C is a back view depicting an effect of the seal positioned on a rear side in the moving direction of the nut; and
FIG. 9 is an axial sectional view of a mode in which chamfering is performed on an inner peripheral surface of an end of the seal in a structure of another embodiment of the ball screw.

### Description of Embodiments

In the following detailed description, many specific details will be described to provide thorough understanding of embodiments of the present invention. However, it will be apparent that even without such specific details, one or more embodiments can be implemented. In addition, for simplifying the drawings, well-known structures and devices are depicted in schematic views.

Hereinafter, a description will be given of an embodiment of a ball screw with reference to the drawings.

### (Structure)

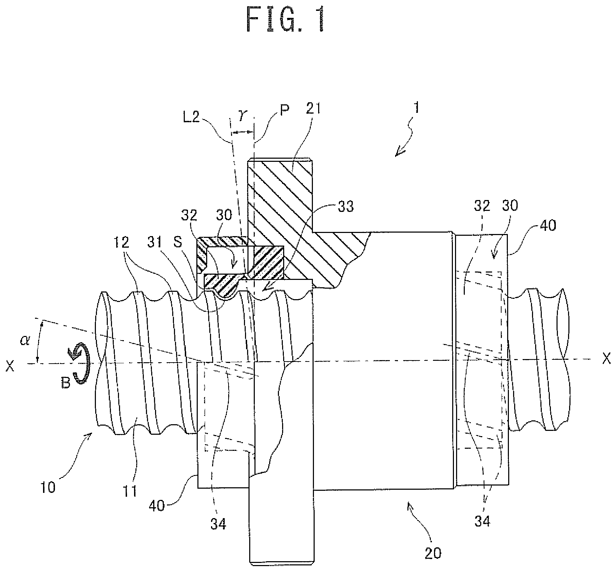

As depicted in FIG. 1, a ball screw 1 of the present embodiment includes a screw shaft 10, a nut 20, and a plurality of balls (unillustrated).

The nut 20 has a tubular shape (e.g., a cylindrical shape) with a through-hole formed therein and is installed so that the screw shaft 10 passes through the through-hole.

On an outer peripheral surface of the screw shaft 10 is formed a helical groove 11, and also, on an inner peripheral surface of the nut 20 is formed a helical groove (unillustrated) with the same lead as that of the helical groove 11. A rolling path along which the plurality of balls (unillustrated) roll is formed by the helical groove 11 and the helical groove (unillustrated) of the nut 20.

Then, in the ball screw 1 thus structured, the nut 20 and the screw shaft 10 are relatively movable via the balls disposed and rolling in the rolling path.

The screw shaft 10 is rotatably axially supported to a machine base (unillustrated) in which the ball screw 1 is installed, and connected to a rotary drive source (unillustrated) such as a motor. In addition, a flange 21 is formed at one end of the nut 20, and a mobile body (unillustrated) such as a mobile table that is driven forward and backward by the ball screw 1 is mounted via the flange 22. Thus, rotation of the screw shaft 10 drives the above mobile body forward and backward via the nut 20.

### <Seal>

Furthermore, in the ball screw 1 of the present embodiment, a seal 30 is attached to at least one end of ends of the nut 20 in a moving direction of at least the nut 20. Herein, as described above, in the ball screw 1 in which the nut 20 moves forward and backward with respect to the screw shaft 10, the seal 30 is preferably attached to each of both ends of the nut 20 in an axial direction (the moving direction) thereof.

The seal 30 surrounds the outer peripheral surface of the screw shaft 10 and includes thereinside a seal mountain 31 entering the helical groove 11 of the screw shaft 10 and a tubular portion 32 exposed axially outside the nut 20.

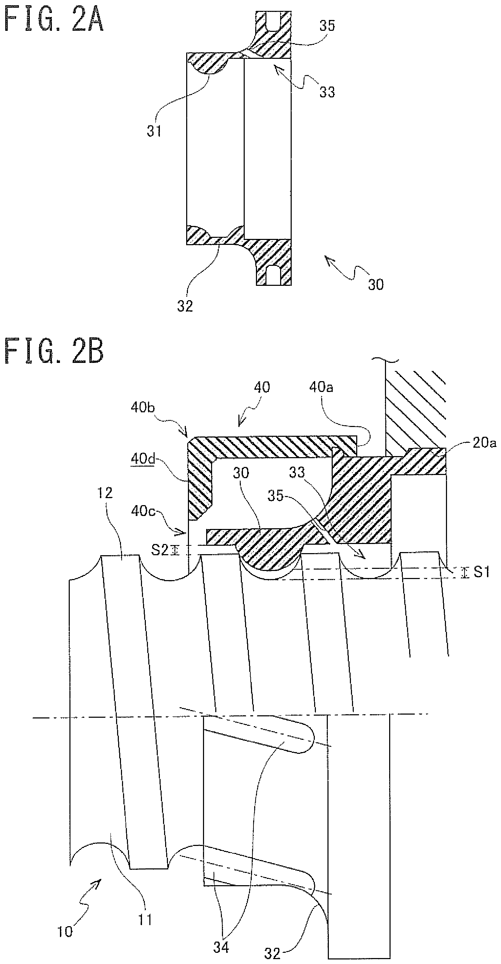

Additionally, in the seal 30 is provided with a grease reservoir portion 33 on an inner peripheral surface of the tubular portion 32 so as to form a space with respect to the screw shaft 10, as depicted in FIG. 2A. The grease reservoir portion 33 is formed so that the inner peripheral surface thereof is enlarged in diameter from one end of the seal 30 exposed from the end of the nut 20 to the other end of the seal 30 buried in the nut 20. In other words, the inner diameter of the one end of the seal 30 is a diameter enough to contact with the land portion 12 of the screw shaft 10, and the inner diameter of the other end of the seal 30 is enlarged greater than the inner diameter of the one end of the seal 30.

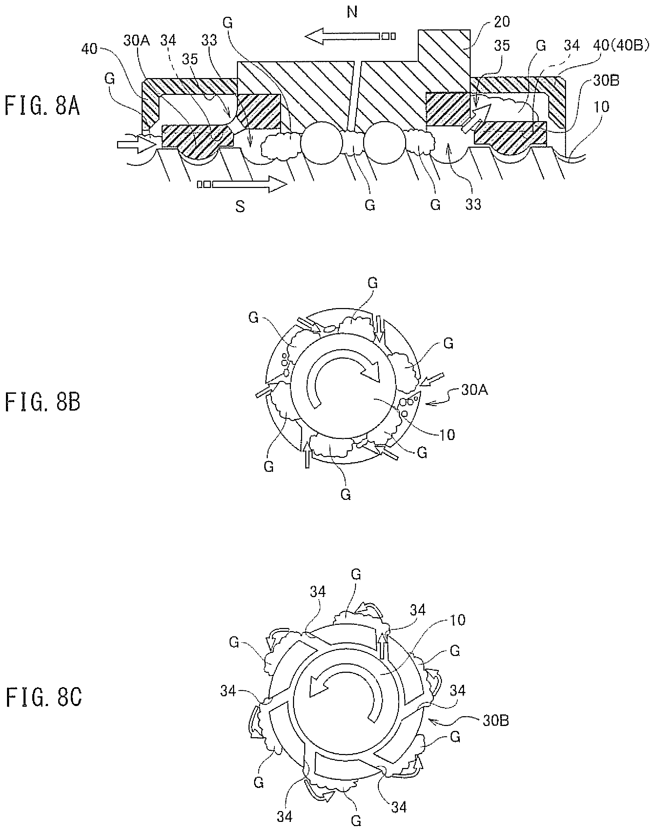

Additionally, in the seal 30 is provided with a discharge outlet 35 communicating with the grease reservoir portion 33 and open to an outer peripheral surface of the tubular portion 32 (see FIGs. 8A to 8C).

The discharge outlet 35 is provided extending axially from an axially outer end of the tubular portion 32. In addition, an opening portion of the discharge outlet 35 on the outer peripheral surface of the tubular portion 32 has preferably a circular shape so that grease is easily pushed out from the grease reservoir portion 33.

### [Gap]

A gap S is provided between the outer peripheral surface of the screw shaft 10 and the inner peripheral surface of the seal 30. Then, a gap size S1 between (a bottom portion of) the helical groove 11 of the screw shaft 10 and the inner peripheral surface of the seal 30 is preferably larger than a gap size S2 between the land portion 12 between the helical grooves 11 of the screw shaft 10 and the inner peripheral surface of the seal 30 (see FIG. 2B). The respective gap sizes S1 and S2 are sizes in the radial direction of the screw shaft 10. Additionally, the gap size S2 is preferably 0.3 mm or less.

Herein, sectional shapes of conventional seals have been formed into a uniform Gothic arch shape so that the gap sizes S1 and S2 become substantially the same in accordance with a sectional shape of the helical groove 11 that is a Gothic arch shape. On the other hand, the sectional shape of the seal of the present embodiment is formed into, for example, a simple R-shape, so that the gap size S1 is made larger than the gap size S2.

By defining the gap sizes S1 and S2 this way, the sectional shape of the seal 30 becomes a shape that makes it easier for grease adhering to the surface of the screw shaft 10 to enter the nut 20.

### [Slit]

Furthermore, in the tubular portion 32 of the seal 30 is formed a slit 34 extending axially from the axially outer end thereof. The slit 34 is provided so as to be inclined with respect to a line in a diameter direction of the screw shaft 10 in a counterclockwise direction as viewed from an outer end face of the tubular portion 32 when the screw shaft 10 has right-hand threads. On the other hand, when the screw shaft 10 has left-hand threads, the slit 34 is formed to be inclined in a clockwise direction as viewed from the outer end face of the tubular portion 32.

Herein, the slit 34 is provided in the same phase as an installation position of the discharge outlet 35 in a circumferential direction of the seal 30 and communicates with the discharge outlet 35.

The slit 34 is provided in six positions at equal intervals in a circumferential direction of the tubular portion 32. However, the number of the slits 34 can be any other number in consideration of the number of discharge outlets 35 and respective functions that will be described later. In addition, preferably, all of the slits 34 communicate with the discharge outlets 35. However, there may be provided a slit 34 not communicating with the discharge outlet 35.

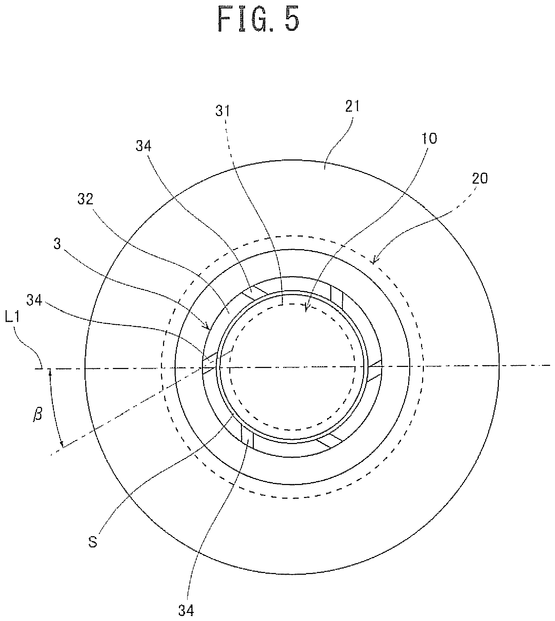

The slits 34 are inclined at an angle β with respect to a line L1 in the diameter direction of the screw shaft 10 in the counterclockwise direction as viewed from the outer end face of the tubular portion 32 to the axial direction of the screw shaft 10 when the screw shaft 10 has right-hand threads (see FIG. 5). Additionally, the screw shaft 10 depicted in FIG. 5 has right-hand threads, and FIG. 5 depicts a state in which the seal 30 on the left side of FIG. 1 is viewed from the left of FIG. 1. In addition, even when the seal 30 on the right side of FIG. 1 is viewed from the right of FIG. 1, it appears the same as the seal 30 of FIG. 5. Additionally, in the case of the screw shaft 10 having left-hand threads, the inclination angle β of the slits 34 will be made to be inclined clockwise with respect to the line L1, which is opposite to the direction of the right-hand threads.

In addition, the slits 34 of the seal 30 are inclined at an angle of α with respect to an axial line X of the screw shaft 10. The direction of the angle α is inclined in a direction along the helical groove formed on the outer peripheral surface of the screw shaft 10 from the axial line X (see FIG. 1). In addition, an angle between a tangent line L2 and a plane P perpendicular to the axial line X is a lead angle γ of the threads. Accordingly, when defined from a relationship with the lead angle γ, the tangent line L2 can be regarded as the helical groove formed on the outer peripheral surface of the screw shaft 10, which defines the lead angle γ of the threads of the screw shaft 10. Then, the slits 34 can be described as being inclined with respect to the axial line X of the screw shaft 10 in the direction along the helical groove formed on the outer peripheral surface of the screw shaft 10, which defines the lead angle γ of the threads of the screw shaft 10.

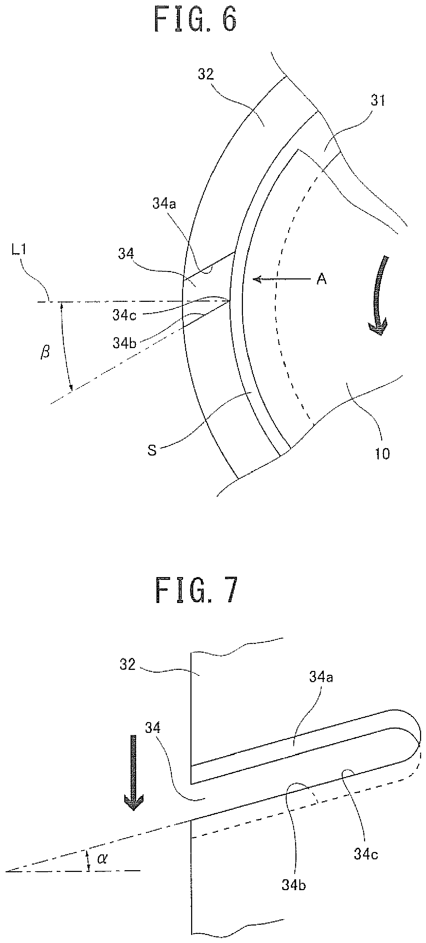

Additionally, since all of the slits 34 are formed with the same width size in the respective directions inclined at the angles α and β, opposing two inner surfaces 34a and 34b (see FIGs. 6 and 7) of the slits 34 are mutually parallel surfaces, and the respective surfaces 34a and 34b are also inclined at the angles α and β. Thus, of the opposing two surfaces (34a, 34b), the surface 34b located on a rotating direction side of the screw shaft 10 forms a sharp angle with the inner peripheral surface of the tubular portion 32 of the seal 30, thereby forming an edge portion 34c thereat. Additionally, arrows in FIGs. 6 and 7 depict the rotation direction of the screw shaft 10.

In addition, in the ball screw 1 of the present embodiment, a cover 40 that covers the tubular portion 32 of the seal 30 is attached to at least one end of ends of the nut 20 or the seal 30 provided at the at least one end thereof in the moving direction of the nut 20, as depicted in FIG. 1 and FIG. 2B. In the ball screw 1 in which the nut 20 moves forward and backward with respect to the screw shaft 10, the cover 40 as well as the seal 30 is also preferably attached to both ends of the nut 20 in the axial direction (the moving direction) thereof or the respective seals 30 provided at both ends thereof. Additionally, the slits 34 do not have to be formed in the seal(s) 30 that will be covered with the cover 40.

The cover 40 has a cylindrical shape with an inner diameter larger than an outer diameter of the tubular portion 32 of the seal 30, as depicted in FIG. 2B. Then, an axial one end 40a of the cover 40 is attached to the nut 20 or the seal 30. On the other hand, at the other end 40b of the cover 40 is provided an end face 40d where there is formed a seal opening portion 40c extending inward (an axial line direction) from an axial tip end thereof and close to an outer peripheral end of the tubular portion 32 of the seal 30 at a predetermined distance therefrom.

As an installation mode of the cover 40, there may be mentioned a mode in which the cover 40 is crimped and fixed to the seal 30 installed so as to be fitted into an annular groove 20a formed in an inner peripheral surface of the axial end of the nut 20 and the nut 20, as depicted in FIG. 2B.

In this manner, by providing the cover 40 for covering the tubular portion 32 of the seal 30, scattering of extra grease is further prevented and seal damage upon collision is reduced, as well as the cover 40 serves as a saucer when extra grease accumulated on an outer peripheral surface of the seal 30 falls by its own weight. As a result of that, recovery of the extra grease can be achieved in a space-saving manner.

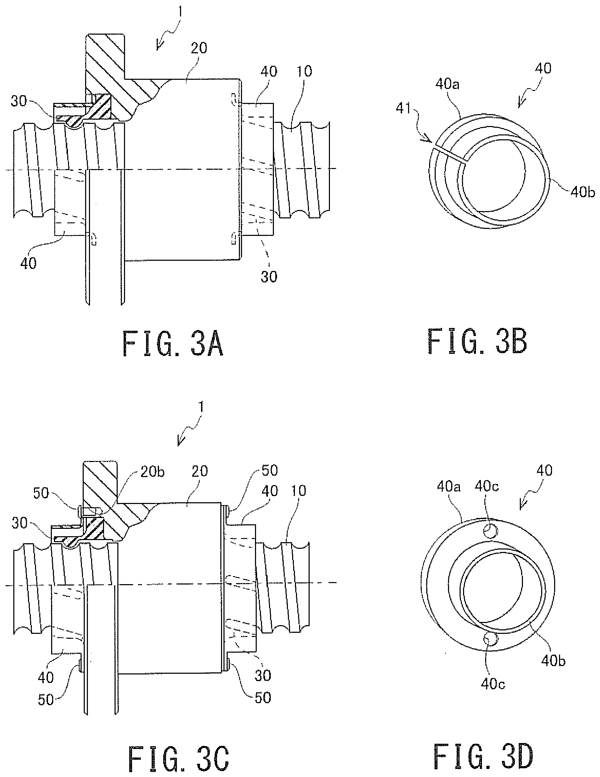

In addition, as depicted in FIGs. 3A and 3B, another installation mode of the cover 40 may be a mode in which an annular groove for attaching the cover 40 is provided in the inner peripheral surface of the axial end of the nut 20, and the outer peripheral surface of the cover 40 is fitted into an inner peripheral surface of the groove by elastically deforming the cover 40 to fix to the nut 20. In this mode, in order to facilitate the attachment of the cover 40, preferably, a split 41 is provided in the axial direction of the cover 40, as depicted in FIG. 3B. Additionally, the cover 40 is preferably made of an elastically deforming material.

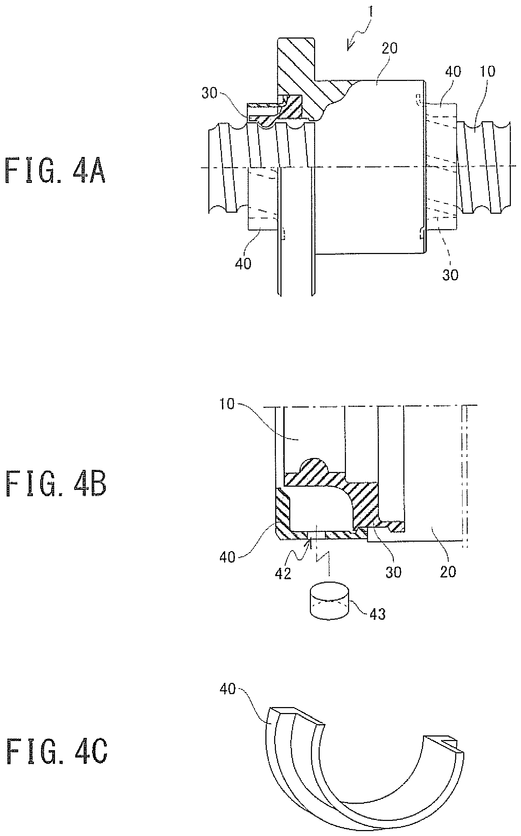

In addition, as another installation mode of the cover 40, screws 50 or the like may be screwed into screw holes 20b provided at axial ends of the nut 20 via fixing through-holes 40c provided in the cover 40 to fix to the ends of the nut 20, as depicted in FIGs. 3C and 3D. Additionally, as another installation mode of the cover 40, the cover 4 0 may be integrated with the seal 30 by insert molding, as depicted in FIG. 4A.

Furthermore, as another installation mode of the cover 40, a discharge hole 42 for discharging grease accumulated in the cover 40 may be provided in a vertically lower surface of the cover 40, as depicted in FIG. 4B. Preferably, in the discharge hole 42 is installed a closing member such as a screw plug 43.

Herein, the cover 40 is attached to the nut 20 or the seal 30 and has a shape extending so as to axially cover the tubular portion 32 of the seal 30. The attachment mode of the cover 40 and the shape thereof are not particularly limited as long as the advantageous effect of the invention is not significantly impaired. Specifically, the cover 40 does not have to have the shape covering the entire outer peripheral surface of the tubular portion 32 of the seal 30 as long as the cover 40 has a shape that stores extra grease falling from the tubular portion 32 of the seal 30.

Specifically, the cover 40 depicted in FIGs. 3A and 3C has a shape extending in the axial direction along the outer peripheral surface of the tubular portion 32 of the seal 30 and does not include the end face 40d having the above-mentioned opening portion 40c. However, the end face may be provided according to the necessity of dust resistance and the like. Additionally, as depicted in FIG. 4C, instead of the shape covering the entire outer peripheral surface of the tubular portion 32 of the seal 30, there may be employed a shape partially covering the outer peripheral surface thereof. The cover 40 of this mode is installed on a vertically lower side of the tubular portion 32 of the seal 30 to axially cover the tubular portion 32 on the side thereof, so that the cover 40 serves as a saucer for discharged grease, thereby exhibiting an advantageous effect of preventing contamination due to scattering of grease from being spread around.

### (Behavior)

Next, a behavior of the ball screw of the present embodiment will be described with reference to FIGs. 8A to 8C.

FIGs. 8A to 8C are diagrams depicting a mechanism in which scattering of grease is prevented by the ball screw of the present embodiment and the seal used therein. FIG. 8A is an axial sectional view; FIG. 8B is a front view depicting an effect of the seal positioned on a front side in the moving direction of the nut; and FIG. 8C is a back view depicting an effect of the seal positioned on a rear side of the moving direction of the nut. Additionally, in FIGs. 8A to 8C, the description will be given by designating the seal positioned on the front side of the moving direction of the nut 20 as seal 30A and the seal positioned on the rear side of the moving direction of the nut 20 as seal 30B. In addition, an arrow "N" of FIG. 8A indicates the moving direction of the nut 20, and an arrow "S" thereof indicates a moving direction of the screw shaft 10.

First, when operating the ball screw 1, the ball screw 1 is operated in a state where grease is filled in a space between the nut 20 and the screw shaft 10. Herein, for example, when the screw shaft 10 is rotated leftward in a rotation direction B as viewed in a right direction from the left in FIG. 1, the nut 20 moves in the right direction in FIG. 1. The movement of the nut 20 is performed while leaving grease in the nut 20 behind on the surface of the screw shaft 10 at a predetermined film thickness from the gap S between the inner peripheral surface of the tubular portion 32 of the seal 30 and the screw shaft 10.

At this time, a grease G adhering to the surface of the screw shaft 10 and being about to come out of the nut 20 is scraped off at the tubular portion 32 of the seal 30B and, due to the counteraction of the tubular portion 32, discharged to an outer periphery of the tubular portion 32 through the grease reservoir portion 33, the discharge outlets 35, and the slits 34 of the seal 30B. Thus, the grease left behind on the surface of the screw shaft 10 does not exceed the above film thickness.

Then, the grease G is guided through the following steps (1) to (5) and finally accumulated on the outer peripheral surface of the seal 30B, whereby the influence of rotation of the screw shaft 10 is eliminated, so that grease scattering can be prevented. Furthermore, when the grease G accumulated on the outer peripheral surface of the seal 30B falls by its own weight, a cover 40B serves as a saucer for the grease G. Thus, recovery of the extra grease G can be achieved in a space-saving manner.

(1) First, as depicted in FIG. 8B, grease on the screw shaft 10 is caught in the nut 20 via a gap between the seal 30A and the screw shaft 10.
(2) Next, as depicted in FIG. 8A, the grease enters the nut 20 through a gap between the helical groove 11 and the seal 30A.
(3) Next, as depicted in FIG. 8A, the grease entering the nut 20 is forced to surge to the land portions 12 by balls.
(4) Then, as depicted in FIG. 8A, the grease surging to the land portions 12 is accumulated in the grease reservoir portion 33 formed by the screw shaft 10 and the seal 30B.
(5) Then, as depicted in FIGs. 8A and 8C, the grease accumulated in the grease reservoir portion 33 is discharged from the nut 20 through the discharge outlets 35 of the seal 30B, guided along the slits 34, and accumulated on the outer peripheral surface of the seal 30B.

At this time, the outer peripheral surface of the seal 30B to which the extra grease G in the nut 20 is discharged is a place in which centrifugal force does not act on the grease G. Accordingly, the grease G is not scattered around by centrifugal force and falls in drops by its own weight to a part below the screw shaft 10 not associated with the scattering. The grease G that falls is stored (accumulated) in the cover 40. Thus, not only there occurs no harmful influence due to the scattering of the grease G, but also recovery of the extra grease G can be achieved in the space-saving manner. In this way, the extra grease G that falls through the slits 34 of the seal 30 falls from the seal 30B located behind the nut 20 upon the movement thereof. Accordingly, in FIGs. 1 to 9, when the screw shaft 10 is rotated leftward as viewing the right from the left in FIG. 1, the nut 20 moves in the right direction in FIG. 1 and the grease G falls from the seal 30 located behind the nut 20 at that time, which is on the left side in FIG. 1. Accordingly, when the screw shaft 10 is rotated in an opposite direction, the nut 20 moves in the left direction in FIG. 1, and similarly, the grease falls from the seal 30 located behind the nut 20 at that time, which is on the right side in FIG. 1, and is stored (accumulated) in the cover 40 covering the seal 30.

As described hereinabove, in the ball screw of the present embodiment, the grease G in the nut 20 is discharged onto the outer periphery of the tubular portion 32 through the grease reservoir portion 33, the discharge outlets 35, and the slits 34 of the seal 30B provided at the rear end of the nut 20 in the moving direction thereof. Thus, since the extra grease in the nut 20 is taken outside at the position where the centrifugal force of the screw shaft 10 hardly acts on, and is stored (accumulated) in the cover 40, and thus the grease does not scatter around.

Particularly, since the slits 34 communicate with the grease reservoir portion 33, the seal 30 installed on the front side in the moving direction of the nut can effectively return extra grease adhering to the surface of the screw shaft 10 into the nut 20. Then, the extra grease is guided onto the outer surface of the seal 30 via the slits 34, thereby avoiding the extra grease not contributing to lubrication in the nut 20 from adhering to the screw shaft 10, so that scattering of the grease can be effectively prevented.

In addition, not only scattering around of the extra grease is prevented, but also attachment of the cover 40 to the nut 20 or the seal 30 is facilitated and recovery of scattered grease can be easily made.

Specifically, in conventional ball screws, grease is supplied from the nut 20, and deterioration or shortage of grease in the nut 20 is compensated for while discharging old grease little by little from the nut 20 during operation. Since lubrication environment of the ball screws is arranged in this way, grease sometimes adheres to the screw shaft 10 after the passage of the nut 20 and to end faces of the nut 20.

Thus, the ball screw of the present embodiment is a ball screw that includes the seals 30 provided with the grease reservoir portion 33, the slits 34, and the discharge outlets 35 as means for retaining for a long period of time and accumulating grease adhering to end faces of the nut 20 in the moving direction thereof and the covers that can maintain a space for enclosing the grease, that are compact, and that are easily detached from the seals. Without using such a large cover that covers the entire ball screw as in the conventional ones, the ball screw of the present embodiment achieves prevention of scattering of grease in a limited space.

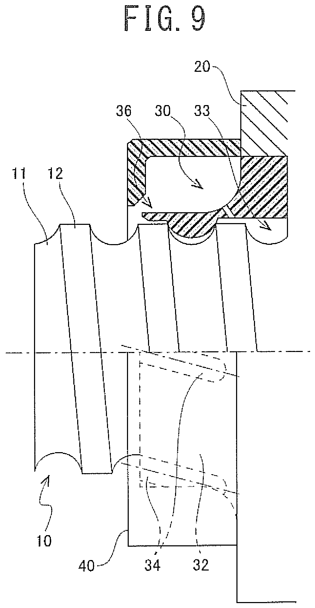

Herein, as another embodiment, as depicted in FIG. 9, preferably, chamfering is performed on an inner diameter of an end face 36 of the seal 30 so as to have a shape that makes it easier to guide grease into the nut 20. The shape, angle, and the like of chamfering on the end face 36 are not particularly limited as long as chamfering is performed on the inner diameter side thereof.

The ball screw of the present invention is suitable to ball screws and sliding screws such as triangular screws and trapezoidal screws used in, for example, semiconductor element manufacturing apparatuses, liquid crystal display panel manufacturing apparatuses and conveyor apparatuses, and other apparatuses used in clean environments.

While the present invention has been described with reference to the specific embodiments hereinabove, the invention is intended not to be limited thereto various changes may be made without departing from the scope of the invention as defined by the appended claims. In addition, although the above embodiments have been described by exemplifying the case of the screw shaft 10 having the right-hand threads, the screw shaft 10 obviously may be one having left-hand threads. In this case, the angle β of the slits 34 depicted in FIG. 5 is opposite to that in FIG. 5, as described above, and the tangent line L2 and the angle α in FIG. 1 also appear line-symmetrically on an underside of the axial line X-X in FIG. 1.

### Reference Signs List

- 1:: Ball screw
- 10:: Screw shaft
- 11:: Helical groove
- 20:: Nut
- 30:: Seal
- 31:: Seal mountain
- 32:: Tubular portion
- 33:: Grease reservoir portion
- 34:: Slit
- 35:: Discharge outlet
- 40:: Cover
- S:: Gap

## Claims

1. A ball screw (1) comprising a screw shaft (10), a nut (20), and a plurality of balls, wherein,
the screw shaft (10) passes through the nut (20),
a rolling path along which the balls roll is formed by a helical groove (11) formed on an outer peripheral surface of the screw shaft (10) and a helical groove formed on an inner peripheral surface of the nut (20),
the balls are disposed in the rolling path,
a seal (30) is attached to at least one end of ends of the nut (20) in a moving direction of the nut (20), and
the seal (30) surrounds an outer periphery of the screw shaft (10) and comprises:
a seal mountain (31) inside the seal (30) entering the helical groove (11) of the screw shaft (10);
a tubular portion (32) exposed axially outside the nut (20); and
a grease reservoir portion (33) provided on an inner peripheral surface of the tubular portion (32) so as to form a space with respect to the screw shaft (10);
**characterized by**
a discharge outlet (35) communicating with the grease reservoir portion (33) and open to an outer peripheral surface of the tubular portion (32);
a slit (34) communicating with the discharge outlet (35) and extending axially in the tubular portion (32) of the seal (30), and
a cover (40) that covers the seal (30) is provided on the nut (20) or the seal (30).

2. The ball screw (1) according to claim 1, wherein the slit (34) is provided in the tubular portion (32) of the seal (30) in such a shape as to be inclined with respect to a line in a diameter direction of the screw shaft (10) in a counterclockwise direction as viewed from an outer end face of the tubular portion (32) when the screw shaft (10) has right-hand threads and in a clockwise direction as viewed from the outer end face of the tubular portion (32) when the screw shaft (10) has left-hand threads.

3. The ball screw (1) according to claim 2, wherein the slit (34) of the seal (30) is inclined with respect to an axial line of the screw shaft (10) in a direction along the helical groove (11) formed on the outer peripheral surface of the screw shaft (10), which helical groove (11) defines a lead angle of the threads of the screw shaft (10).

4. The bail screw (1) according to any one of claims 1 to 3, wherein a gap (5) is provided between the outer peripheral surface of the screw shaft (10) and an inner peripheral surface of the seal (30), and a gap size between the helical groove (11) of the screw shaft (10) and the inner peripheral surface of the seal (30) is larger than a gap size between a land portion of the screw shaft (10) and the inner peripheral surface of the seal (30).

## Patentansprüche

1. Kugelschraube (1), umfassend eine Schraubenwelle (10), eine Mutter (20) und mehrere Kugeln, wobei
die Schraubenwelle (10) durch die Mutter (20) hindurch verläuft,
ein Rollweg, entlang dem die Kugeln rollen, ausgebildet ist durch eine spiralförmige Nut (11), die an einer Außenumfangsfläche der Schraubenwelle (10) ausgebildet ist, und eine spiralförmige Nut, die an einer Innenumfangsfläche der Mutter (20) ausgebildet ist,
die Kugeln in dem Rollweg angeordnet sind,
eine Dichtung (30) an mindestens einem Ende von Enden der Mutter (20) in einer Bewegungsrichtung der Mutter (20) angebracht ist, und
die Dichtung (30) einen Außenumfang der Schraubenwelle (10) umgibt und umfasst:
einen Dichtungsberg (31) innerhalb der Dichtung (30), der in die schraubenförmige Nut (11) der Schraubenwelle (10) eintritt;
einen rohrförmigen Abschnitt (32), der axial außerhalb der Mutter (20) freiliegt; und
einen Fettreservoirabschnitt (33), der an einer Innenumfangsfläche des rohrförmigen Abschnitts (32) vorgesehen ist, um einen Raum in Bezug auf die Schraubenwelle (10) zu bilden;
**gekennzeichnet durch**
einen Abgabeauslass (35), der mit dem Fettbehälterabschnitt (33) in Verbindung steht und zu einer Außenumfangsfläche des rohrförmigen Abschnitts (32) offen ist;
einen Schlitz (34), der mit dem Abgabeauslass (35) in Verbindung steht und sich axial in dem rohrförmigen Abschnitt (32) der Dichtung (30) erstreckt, und dass
eine Abdeckung (40), welche die Dichtung (30) abdeckt, an der Mutter (20) oder der Dichtung (30) vorgesehen ist.

2. Kugelschraube (1) nach Anspruch 1, wobei der Schlitz (34) in dem rohrförmigen Abschnitt (32) der Dichtung (30) in einer solchen Form vorgesehen ist, dass er in Bezug auf eine Linie in einer Durchmesserrichtung der Schraubenwelle (10) im Gegenuhrzeigersinn von einer äußeren Endfläche des rohrförmigen Abschnitts (32) aus gesehen geneigt ist, wenn die Schraubenwelle (10) Rechtsgewinde hat, und im Uhrzeigersinn von der äußeren Endfläche des rohrförmigen Abschnitts (32) aus gesehen, wenn die Schraubenwelle (10) Linksgewinde hat.

3. Kugelschraube (1) nach Anspruch 2, wobei der Schlitz (34) der Dichtung (30) in Bezug auf eine Axiallinie der Schraubenwelle (10) in einer Richtung entlang der Schraubennut (11) geneigt ist, welche an der Außenumfangsfläche der Schraubenwelle (10) ausgebildet ist, wobei die Schraubennut (11) einen Steigungswinkel der Gewinde der Schraubenwelle (10) definiert.

4. Kugelschraube (1) nach einem der Ansprüche 1 bis 3, wobei ein Spalt (5) zwischen der Außenumfangsfläche der Schraubenwelle (10) und einer Innenumfangsfläche der Dichtung (30) vorgesehen ist und eine Spaltgröße zwischen der Spiralnut (11) der Schraubenwelle (10) und der Innenumfangsfläche der Dichtung (30) größer ist als eine Spaltgröße zwischen einem Stegabschnitt der Schraubenwelle (10) und der Innenumfangsoberfläche der Dichtung (30).

## Revendications

1. Vis à billes (1) comprenant une tige de vis (10), un écrou (20) et une pluralité de billes, dans laquelle :
la tige de vis (10) passe à travers l'écrou (20),
une trajectoire de roulement le long de laquelle les billes roulent, est formée par une rainure hélicoïdale (11) formée sur une surface périphérique externe de la tige de vis (10) et une rainure hélicoïdale formée sur une surface périphérique interne de l'écrou (20),
les billes sont disposées dans la trajectoire de roulement,
un joint d'étanchéité (30) est fixé sur au moins une extrémité des extrémités de l'écrou (20) dans une direction de déplacement de l'écrou (20), et
le joint d'étanchéité (30) entoure une périphérie externe de la tige de vis (10) et comprend :
une bosse de joint d'étanchéité (31) à l'intérieur du joint d'étanchéité (30) entrant dans la rainure hélicoïdale (11) de la tige de vis (10) ;
une partie tubulaire (32) exposée de manière axiale à l'extérieur de l'écrou (20) ; et
une partie de réservoir de graisse (33) prévue sur une surface périphérique interne de la partie tubulaire (32) afin de former un espace par rapport à la tige de vis (10) ;
**caractérisée par** :
une sortie de décharge (35) communiquant avec la partie de réservoir de graisse (33) et ouverte sur une surface périphérique externe de la partie tubulaire (32) ;
une fente (34) communiquant avec la sortie de décharge (35) et s'étendant de manière axiale dans la partie tubulaire (32) du joint d'étanchéité (30), et
un couvercle (40) qui recouvre le joint d'étanchéité (30) est prévu sur l'écrou (20) ou le joint d'étanchéité (30).

2. Vis à billes (1) selon la revendication 1, dans lequel la fente (34) est prévue dans la partie tubulaire (32) du joint d'étanchéité (30) dans une forme telle qu'elle s'incline par rapport à une ligne dans une direction diamétrale de la tige de vis (10) dans la sens inverse des aiguilles d'une montre, comme observé à partir d'une face d'extrémité externe de la partie tubulaire (32) lorsque la tige de vis (10) a des filetages à droite et dans le sens des aiguilles d'une montre, comme observé à partir de la face d'extrémité externe de la partie tubulaire (32) lorsque la tige de vis (10) a des filetages à gauche.

3. Vis à billes (1) selon la revendication 2, dans lequel la fente (34) du joint d'étanchéité (30) est inclinée par rapport à une ligne axiale de la tige de vis (10) dans une direction le long de la rainure hélicoïdale (11) formée sur la surface périphérique externe de la tige de vis (10), laquelle rainure hélicoïdale (11) définit un angle d'attaque des filetages de la tige de vis (10).

4. Vis à billes (1) selon l'une quelconque des revendications 1 à 3, dans lequel un espace (5) est prévu entre la surface périphérique externe de la tige de vis (10) et une surface périphérique interne du joint d'étanchéité (30), et une taille d'espace entre la rainure hélicoïdale (11) de la tige de vis (10) et la surface périphérique interne du joint d'étanchéité (30) est supérieure à une taille d'espace entre une partie d'appui de la tige de vis (10) et la surface périphérique interne du joint d'étanchéité (30).
